# EUROPEAN PATENT SPECIFICATION

(11) **EP 4 239 776 B1**
(45) Date of publication and mention of the grant of the patent: **30.04.2025**
(21) Application number: 23155991.5
(22) Date of filing: 10.02.2023
(51) Int. Cl.: H01M 50/284, H01M 10/48, H01M 50/507, H01M 50/519, H01M 50/569, H01M 50/209

(54) **BATTERY CONNECTION MODULE**
BATTERIEANSCHLUSSMODUL
MODULE DE CONNEXION DE BATTERIE

(30) Priority: 14.02.2022 CN 202210132933
(43) Date of publication of application: 06.09.2023
(73) Proprietor: Molex, LLC, Lisle, IL 60532 (US)
(72) Inventor: LIN, Yong, ChengDu (CN); LIM, Kian Heng, Jurong Town (SG); ZENG, Shang Xiu, ChengDu (CN)
(74) Representative: Ter Meer Steinmeister & Partner

(56) References cited:
- EP-A1- 3 799 148
- US-A1- 2012 148 876
- US-A1- 2019 131 672
- US-A1- 2021 151 812

## Description

### TECHNICAL FIELD

The present disclosure relates to the field of battery technology, and particularly relates to a battery connection module.

### BACKGROUND

CN109891661A (patent family US11,127,990B2 and US11,081,734B2) discloses a battery pack, the battery pack includes at least one battery cell, a protecting circuit module which includes a rigid printed circuit board and is electrically connected with the battery cell, at least one temperature sensing member which is provided at a surface of the battery cell, and a flexible printed circuit board which electrically connects the rigid printed circuit board and temperature sensing member.

However, the flexible printed circuit board disclosed by the above prior art only can be used to collect temperature alone, cannot meet a need on a function that voltage information of the battery is collected at the same time.
EP3799148A1 describes a battery module with a flexible interconnector comprising a plurality of aligned battery cells with surfaces of different orientation and a cell supervision circuit, CSC, configured to receive signals corresponding to the voltage and/or temperature of at least one battery cell. A flexible interconnector of the battery module comprises a strip-shaped flexible printed circuit, FPC, with a first insulating main surface, a second insulating main surface opposite the first insulating main surface and a plurality of thermally and/or electrically conducting lines disposed between the first insulating main surface and the second insulating main surface.
US2021151812A1 describes a battery module comprising a plurality of battery cells, a first flexible printed circuit assembly and a thermistor FPCA, the first FPCA including a flexible substrate, and voltage sense lines connected with voltage sense tabs and temperature sense lines connected with temperature sense tabs formed on the flexible substrate; wherein the voltage sense tabs are electrically connected to a positive terminal or a negative terminal of the battery cells to measure the voltage of the battery cells; the thermistor FPCA includes a temperature sensor and connection tabs, the temperature sensor is arranged to abut the battery cells, the connection tabs are connected to the temperature sense tabs so as to transmit the temperature signals detected by the temperature sensor to the temperature sense lines.

### SUMMARY

One main object of the present disclosure is to provide a battery connection module, the battery connection module can utilize a flexible circuit board which meets need that temperature information and voltage information are collected at the same time so as to overcome at least one deficiency of the above prior art.

The object is solved by the features of the independent claims. Preferred embodiments are given in the dependent claims.

In order to realize the above object, the present disclosure employs a following technical solution: according to one aspect of the present disclosure, a battery connection module is provided, the battery connection module is used to connect a plurality of batteries, the battery connection module comprises a plurality of busbars, a rigid circuit board and at least one connecting assembly; the plurality of busbars are used to connect the plurality of batteries; the rigid circuit board is connected to the plurality of busbars; the connecting assembly is used to connect the corresponding busbar and the rigid circuit board, the connecting assembly comprises a flexible circuit board, a temperature sensor and a voltage collecting pad; the flexible circuit board has a first end portion, a second end portion and a middle portion, the first end portion connects the corresponding busbar, the second end portion connects the rigid circuit board, the middle portion connects the first end portion and the second end portion, the flexible circuit board is provided with a temperature collecting wiring and a voltage collecting wiring; the temperature sensor and a voltage collecting pad are respectively provided to the first end portion, the voltage collecting pad is connected to the corresponding busbar, the temperature sensor and the voltage collecting pad are connected to the rigid circuit board at the second end portion respectively via the temperature collecting wiring and the voltage collecting wiring.

According to one or more embodiments, the connecting assembly further comprises a conducting plate.

The conducting plate is provided between the first end portion of the flexible circuit board and the busbar.

The conducting plate has an electrical conduction function and a thermal conduction.

The voltage collecting pad is provided to a lower surface of the first end portion and connected to an upper surface of the conducting plate.

The temperature sensor is provided to an upper surface of the first end portion.

According to one or more embodiment, the temperature sensor may correspond to a middle position of the voltage collecting pad in position.

According to one or more embodiments, the temperature collecting wiring may be provided to an upper surface of the flexible circuit board.

According to one or more embodiments, the temperature collecting wiring may have a first end.

According to one or more embodiments, the first end may extend to the first end portion of the flexible circuit board and may have a first electrical conduction pad.

According to one or more embodiments, the first electrical conduction pad may be used to connect the temperature sensor.

According to one or more embodiments, the temperature collecting wiring may have a second end.

According to one or more embodiments, the second end portion of the flexible circuit board may be provided with a first electrical conduction hole.

According to one or more embodiments, the second end may extend to the second end portion of the flexible circuit board.

According to one or more embodiments, the second end may connect the first electrical conduction hole and may be connected to a lower surface of the flexible circuit board via the first electrical conduction hole.

According to one or more embodiments, a lower surface of the second end portion of the flexible circuit board may be provided with a second electrical conduction pad.

According to one or more embodiments, the second electrical conduction pad may be connected to the rigid circuit board.

According to one or more embodiments, the second end of the temperature collecting wiring may be connected to the second electrical conduction pad via the first electrical conduction hole.

According to one or more embodiments, the rigid circuit board may be provided with a third electrical conduction pad.

According to one or more embodiments, the third electrical conduction pad may be used to be connected to the second electrical conduction pad.

According to one or more embodiments, the voltage collecting wiring may be provided to a lower surface of the flexible circuit board.

According to one or more embodiments, the voltage collecting wiring may have a third end.

According to one or more embodiments, the third end may connect the voltage collecting pad.

According to one or more embodiments, the voltage collecting wiring may have a fourth end.

According to one or more embodiments, a lower surface of the second end portion of the flexible circuit board may be provided with a fourth electrical conduction pad.

According to one or more embodiments, the fourth end of the voltage collecting wiring may be connected to the fourth electrical conduction pad.

According to one or more embodiments, the rigid circuit board may be provided with a fifth electrical conduction pad.

According to one or more embodiments, the fifth electrical conduction pad may be used to be connected to the fourth electrical conduction pad.

According to one or more embodiments, a connection between the conducting plate and the busbar and a connection between the conducting plate and the flexible circuit board may employ different welding processes.

According to one or more embodiments, the voltage collecting pad may be welded onto the conducting plate by a surface welding technology.

According to one or more embodiments, the conducting plate and the busbar may be welded by a laser welding technology.

According to one or more embodiments, the middle portion of the flexible circuit board may be a flexible construction.

According to one or more embodiments, the connecting assembly may further comprise a packaging cover.

According to one or more embodiments, the packaging cover may be provided to the first end portion of the flexible circuit board and may be used to package the temperature sensor.

According to one or more embodiments, the connecting assembly may further comprise a strengthening plate.

According to one or more embodiments, the strengthening plate may be provided to an upper surface of the second end portion of the flexible circuit board.

As can be seen from the above technical solutions, advantages and positive effects of the battery connection module proposed by the present disclosure lie in that: the battery connection module proposed by the present disclosure includes a plurality of busbars, a rigid circuit board and at least one connecting assembly. The connecting assembly is used to connect the corresponding busbar and the rigid circuit board, the connecting assembly includes a flexible circuit board, a temperature sensor and a voltage collecting pad. The flexible circuit board has a first end portion, a second end portion and a middle portion, the first end portion connects the corresponding busbar, the second end portion connects the rigid circuit board, the middle portion connects the first end portion and the second end portion, the flexible circuit board is provided with a temperature collecting wiring and a voltage collecting wiring. The temperature sensor and the voltage collecting pad are respectively provided to the first end portion, the voltage collecting pad is connected to the corresponding busbar, the temperature sensor and the voltage collecting pad are connected to the second end portion of the rigid circuit board respectively via the temperature collecting wiring and the voltage collecting wiring. Accordingly, the present disclosure can utilize the flexible circuit board which is provided with the voltage collecting wiring and the temperature collecting wiring at the same time, and can meet the need that temperature information and voltage information are collected at the same time.

### BRIEF DESCRIPTION OF THE DRAWINGS

Various purpose, features and advantages of the present disclosure will be apparent from considering the detailed description of preferred embodiments of the present disclosure in combination with the drawings. The drawings are only exemplary illustrations of the present disclosure and are not necessarily drawn to scale. In the drawings, the same reference numeral always indicates the same or similar element. In the drawings:
FIG. 1 is an exploded schematic view of a battery pack according to an exemplary embodiment;
FIG. 2 is a structural schematic view of a battery connection module of FIG. 1;
FIG. 3 is an exploded schematic view of the battery connection module of FIG. 1;
FIG. 4 is a partially enlarged schematic view of FIG. 2 indicated by a dotted-line frame A;
FIG. 5 is a partially enlarged schematic view of FIG. 2 indicated by a dotted-line frame B;
FIG. 6 is an enlarged schematic view of partial components of FIG. 5;
FIG. 7 is an exploded schematic view of FIG. 6;
FIG. 8 is a structural schematic view of a flexible circuit board FIG. 6 viewed from an angle; and
FIG. 9 is a structural schematic view of the flexible circuit board FIG. 6 viewed from another angle.

**Reference numerals**

| | | | |
|---|---|---|---|
| | | 142 | voltage collecting pad |
| | | 151 | temperature collecting wiring |
| 100 | battery connection module | 1511 | first end |
| 110 | busbar | 1512 | second end |
| 120 | rigid circuit board | 152 | voltage collecting wiring |
| 130 | flexible circuit board | 1521 | third end |
| 131 | first end portion | 1522 | fourth end |
| 132 | second end portion | 160 | conducting plate |
| 133 | middle portion | 161 | laser welding point |
| 141 | temperature sensor | 171 | first electrical conduction pad |
| 141' | temperature sensor | 172 | second electrical conduction pad |
| 141" | temperature sensor | 173 | third electrical conduction pad |
| | | 174 | fourth electrical conduction pad |
| | | 175 | fifth electrical conduction pad |
| 181 | first electrical conduction hole | 300 | end plate |
| 182 | second electrical conduction hole | C | connecting assembly |
| 191 | packaging cover | D | bridging piece |
| 192 | strengthening plate | S1 | upper surface |
| 200 | battery | S2 | lower surface |

### DETAILED DESCRIPTION

Typical embodiments embodying the features and advantages of the present disclosure will be described in detail in the following description. It should be understood that the present disclosure can have various changes in different embodiments, which are not departed from the scope of the present disclosure, and the descriptions and drawings thereof are for illustrative purposes in essence and are not for limiting the present disclosure.

In the following description of different exemplary embodiments of the present disclosure, reference is made to the accompanying drawings, which form a part of the present disclosure, and in which different exemplary structures, systems, and steps of aspects that may implement the present disclosure are shown by way of example. It should be understood that other specific solutions of components, structures, exemplary devices, systems, and steps may be used, and structural and functional modifications may be made without departing from the scope of the present disclosure. Moreover, although the terms "above", "between", "within", and the like may be used in this specification to describe different exemplary features and elements of the present disclosure, these terms are used herein for convenience only, for example, according to the direction of the examples illustrated in the accompanying drawings. Any content of the present specification should not be understood the structure falls within the scope of the present disclosure is required to be positioned in a specific three-dimensional direction.

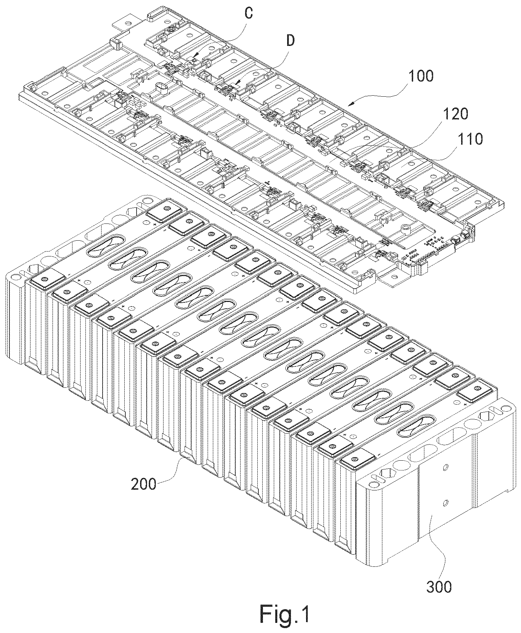

Referring to FIG. 1, FIG. 1 representatively illustrates an exploded schematic view of a battery pack proposed by the present disclosure. In the exemplary embodiment, the battery connection module 100 proposed by the present disclosure is described by taking the battery connection module 100 applied to a battery pack for example. A person skilled in the art easily understands that, in order to apply relevant design of the present disclosure to other types of energy storing devices, various modifications, additions, substitutions, deletions or other variations may be made to following specific embodiments, but these modifications, additions, substitutions, deletions or other variations are still fallen within a scope of a principle of the battery connection module 100 proposed by the present disclosure.

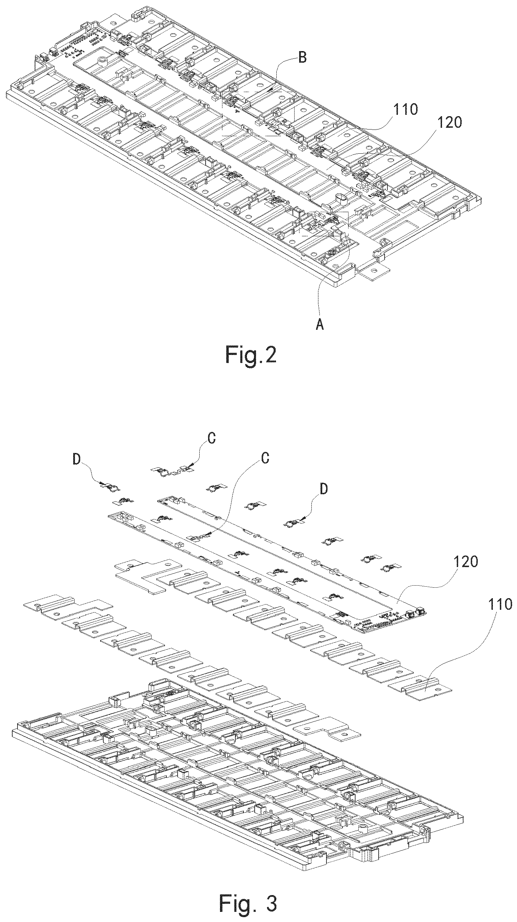

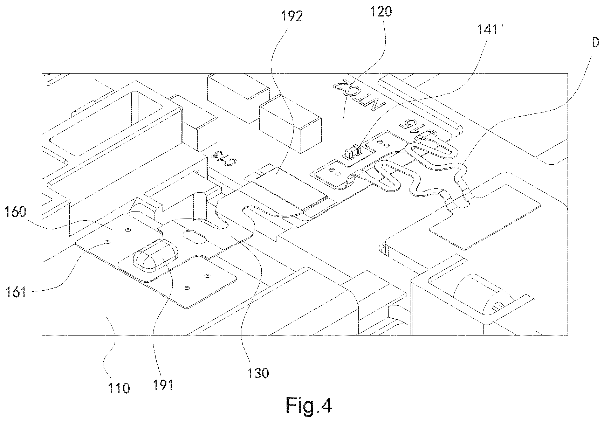

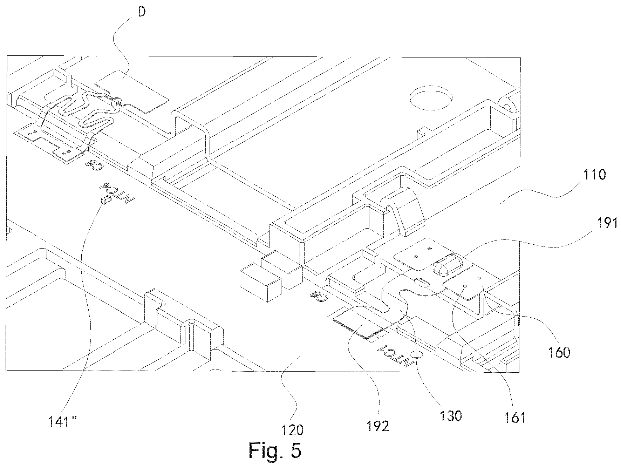

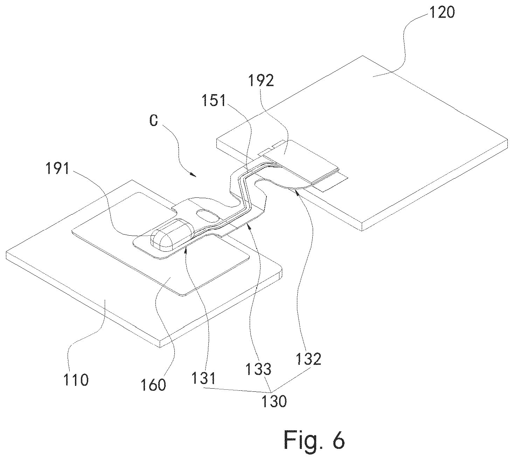

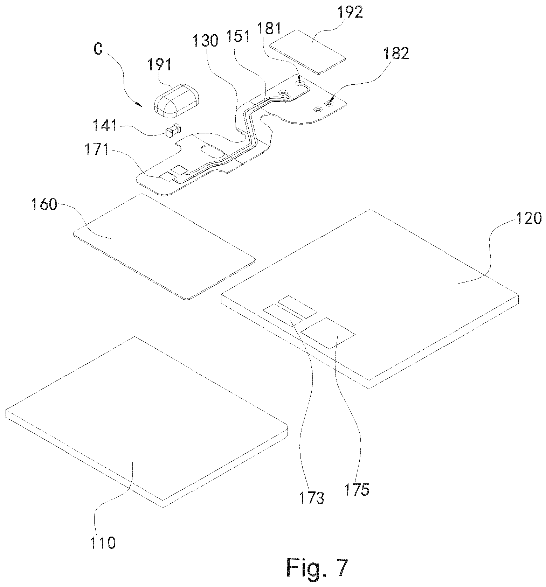

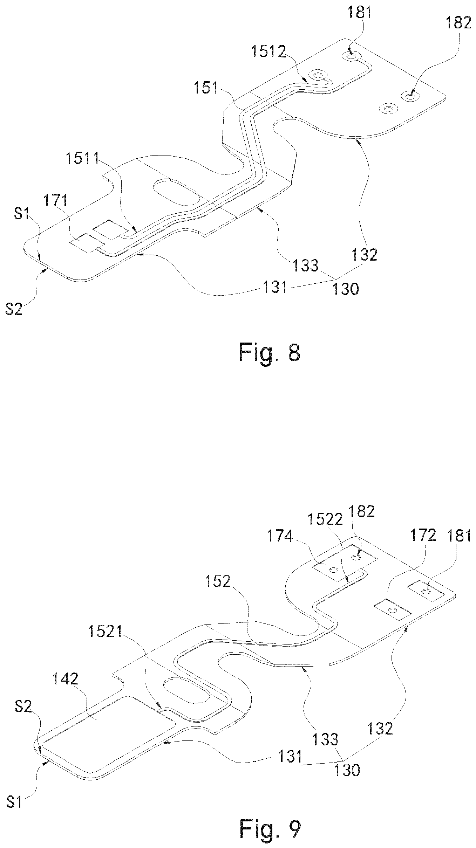

As shown in FIG. 1, in the present embodiment, the battery connection module 100 proposed by the present disclosure is provided on a plurality of batteries 200 of a battery pack, the battery connection module 100 is used to connect the plurality of batteries 200. In combination with referring to FIG. 2 to FIG. 9, FIG. 2 representatively illustrates a structural schematic view of the battery connection module 100, FIG. 3 representatively illustrates an exploded schematic view of the battery connection module 100, FIG. 4 representatively illustrates a partially enlarged schematic view of FIG. 2 indicated by a dotted-line frame A, FIG. 5 representatively illustrates a partially enlarged schematic view of FIG. 2 indicated by a dotted-line frame B, FIG. 6 representatively illustrates an enlarged schematic view of partial components of FIG. 5 and specifically illustrates an enlarged structure for connection between one connecting assembly C and a rigid circuit board 120 and one busbar 110, FIG. 7 representatively illustrates an exploded schematic view of FIG. 6, FIG. 8 representatively illustrates a structural schematic view of a flexible circuit board 130 viewed from an angle and specifically illustrates a structure viewed from an oblique top angle, and FIG. 9 representatively illustrates a structural schematic view of the flexible circuit board 130 viewed from another angle and specifically illustrates a structure viewed from an oblique bottom angle. Hereinafter in combination with these figures, each main constituent part of the battery connection module 100 proposed by the present disclosure will be described in detail in structure, connecting manner and function relationship.

As shown in FIG. 1 to FIG. 9, in the present embodiment, the battery connection module 100 proposed by the present disclosure includes a plurality of busbars 110, a rigid circuit board 120 and a plurality of connecting assemblies C. Specifically, the plurality of busbars 110 are used to connect the plurality of batteries 200. The rigid circuit board 120 are connected with some of the plurality of busbars 110 via the plurality of connecting assemblies C, and the rigid circuit board 120 are connected with the others of the plurality of busbars 110 via bridging pieces D which are metal materials. The connecting assembly C includes a flexible circuit board 130, a temperature sensor 141 and a voltage collecting pad 142. The flexible circuit board 130 has a first end portion 131, a second end portion 132 and a middle portion 133, the first end portion 131 connects the busbar 110, the second end portion 132 connects the rigid circuit board 120, the middle portion 133 connects the first end portion 131 and the second end portion 132, the flexible circuit board 130 is provided with a temperature collecting wiring 151 and a voltage collecting wiring 152. The temperature sensor 141 and the voltage collecting pad 142 are respectively provided to the first end portion 131, the voltage collecting pad 142 is connected to the busbar 110, the temperature sensor 141 and the voltage collecting pad 142 are connected to the rigid circuit board 120 respectively via the temperature collecting wiring 151 and the voltage collecting wiring 152 at the second end portion 132. Accordingly, the present disclosure can utilize the flexible circuit board 130 which is provided with the voltage collecting wiring 152 and the temperature collecting wiring 151 at the same time to meet a need that temperature information and voltage information are collected at the same time.

In some embodiments, the battery connection module 100 also may only include one connecting assembly C. In other words, in various possible embodiments which is conformed to the design concept of the present disclosure, the battery connection module 100 proposed by the present disclosure may include at least one connecting assembly C.

As shown in FIG. 4 to FIG. 7, in an embodiment of the present disclosure, the connecting assembly C further includes a conducting plate 160. Specifically, the conducting plate 160 is provided between the first end portion 131 of the flexible circuit board 130 and the busbar 110, and the conducting plate 160 has an electrical conduction function and a thermal conduction function. Accordingly, that conducting plate 160 is mounted between the busbar 110 and the flexible circuit board 130 in the present disclosure makes that the flexible circuit board 130 can be more easily welded. And, by providing the conducting plate 160 which has both the thermal conduction function and the electrical conduction function, in addition to that the conducting plate 160 can connect the voltage collecting wiring 152, the conducting plate 160 further can conduct heat to the temperature sensor 141, which increases accuracy of temperature collecting of the temperature sensor 141 and reduces temperature response time. Specifically, because the conducting plate 160 has the electrical conduction function, the conducting plate 160 may be connected to the voltage collecting wiring 152 of the flexible circuit board 130. And, because the conducting plate 160 has the thermal conduction function at the same time, and the voltage collecting pad 142 also has a thermal conduction function, in combination with a design that the temperature sensor 141 correspond to a middle position of the voltage collecting pad 142, the accuracy of temperature collecting of the temperature sensor 141 can be further increased, and the temperature response time is reduced.

As shown in FIG. 6 and FIG. 7, based on the design that the connecting assembly C includes the conducting plate 160, in an embodiment of the present disclosure, the voltage collecting pad 142 is provided to a lower surface S2 of the first end portion 131 and is connected to an upper surface of the conducting plate 160, and the temperature sensor 141 is provided to an upper surface S1 of the first end portion 131.

As shown in FIG. 7, based on the design that the voltage collecting pad 142 and the temperature sensor 141 are respectively provided to the lower surface S2 and the upper surface S1 of the first end portion 131, in an embodiment of the present disclosure, the temperature sensor 141 corresponds to the middle position of the voltage collecting pad 142, accordingly the accuracy of temperature collecting of the temperature sensor 141 can be further increased, and the temperature response time is reduced.

As shown in FIG. 6 to FIG. 8, based on the design that the temperature sensor 141 is provided to the upper surface S1 of the first end portion 131, in an embodiment of the present disclosure, the temperature collecting wiring 151 is provided to an upper surface S1 of the flexible circuit board 130, the temperature collecting wiring 151 has a first end 1511 , the first end 1511 extends to the first end portion 131 of the flexible circuit board 130 and has a first electrical conduction pad 171, the first electrical conduction pad 171 is used to connect the temperature sensor 141.

As shown in FIG. 8 and FIG. 9, based on the design that the temperature sensor 141 is provided to the upper surface S1 of the first end portion 131, in an embodiment of the present disclosure, the temperature collecting wiring 151 is provided to the upper surface S1 of the flexible circuit board 130, the temperature collecting wiring 151 has a second end 1512, the second end portion 132 of the flexible circuit board 130 is provided with a first electrical conduction hole 181 which penetrates the upper surface S1 and the lower surface S2, the second end 1512 extends to the second end portion 132 of the flexible circuit board 130, the second end 1512 connects the first electrical conduction hole 181 and is connected to a lower surface S2 of the flexible circuit board 130 via the first electrical conduction hole 181.

Based on the design that the second end portion 132 of the flexible circuit board 130 is provided with the first electrical conduction hole 181, in an embodiment of the present disclosure, a hole wall of the first electrical conduction hole 181 may be plated with a metal plating, a material of the metal plating may be cooper, cooper alloy and the like.

As shown in FIG. 9, based on the design that the second end portion 132 of the flexible circuit board 130 is provided with the first electrical conduction hole 181, in an embodiment of the present disclosure, a lower surface S2 of the second end portion 132 of the flexible circuit board 130 is provided with a second electrical conduction pad 172, the second electrical conduction pad 172 is connected to the rigid circuit board 120. On this basis, the first electrical conduction hole 181 penetrates the flexible circuit board 130 and the second electrical conduction pad 172, the second end 1512 of the temperature collecting wiring 151 is connected to the second electrical conduction pad 172 via the first electrical conduction hole 181.

As shown in FIG. 7, based on the design that the lower surface S2 of the second end portion 132 of the flexible circuit board 130 is provided with the second electrical conduction pad 172, in an embodiment of the present disclosure, the rigid circuit board 120 is provided with a third electrical conduction pad 173, the third electrical conduction pad 173 is used to be connected to the second electrical conduction pad 172.

As shown in FIG. 6, FIG. 7 and FIG. 9, based on the design that the voltage collecting pad 142 is provided to the lower surface S2 of the first end portion 131, in an embodiment of the present disclosure, the voltage collecting wiring 152 is provided to the lower surface S2 of the flexible circuit board 130, the voltage collecting wiring 152 has a third end 1521, the third end 1521 connects the voltage collecting pad 142.

As shown in FIG. 9, based on the design that the voltage collecting pad 142 is provided to the lower surface S2 of the first end portion 131, in an embodiment of the present disclosure, the voltage collecting wiring 152 is provided to the lower surface S2 of the flexible circuit board 130, the voltage collecting wiring 152 has a fourth end 1522, the lower surface S2 of the second end portion 132 of the flexible circuit board 130 is provided with a fourth electrical conduction pad 174, the fourth end 1522 of the voltage collecting wiring 152 is connected to the fourth electrical conduction pad 174.

As shown in FIG. 8 and FIG. 9, based on the design that the lower surface S2 of the second end portion 132 of the flexible circuit board 130 is provided with the fourth electrical conduction pad 174, in an embodiment of the present disclosure, the second end portion 132 of the flexible circuit board 130 may be additionally provided with a second electrical conduction hole 182 which penetrates the upper surface S1 and the lower surface S2 and is connected to the fourth electrical conduction pad 174.

Based on the design that the second end portion 132 of the flexible circuit board 130 is provided with the second electrical conduction hole 182, in an embodiment of the present disclosure, a hole wall of the second electrical conduction hole 182 may be plated with a metal plating, a material of the metal plating may be cooper, cooper alloy and the like.

As shown in FIG. 7, based on the design the lower surface S2 of the second end portion 132 of the flexible circuit board 130 is provided with the fourth electrical conduction pad 174, in an embodiment of the present disclosure, the rigid circuit board 120 is provided with a fifth electrical conduction pad 175, the fifth electrical conduction pad 175 is used to be connected to the fourth electrical conduction pad 174.

In an embodiment of the present disclosure, a connection between the conducting plate 160 and the busbar 110 and a connection between the conducting plate 160 and the flexible circuit board 130 employ different welding processes. By the above design, the present disclosure can enhance weldability and welding strength among the conducting plate 160, the busbar 110 and the flexible circuit board 130. In some embodiments, the connection between the conducting plate 160 and busbar 110 and the connection between the conducting plate 160 and the flexible circuit board 130 also may employ the same welding process, and so the present disclosure is not limited thereto.

Specifically, in an embodiment of the present disclosure, the voltage collecting pad 142 is welded onto the conducting plate 160 by a surface welding technology. On this basis, for example, the conducting plate 160 may be a nickel plat, an aluminum plate and the like, the nickel plate may be partially plated with tin, or the aluminum plate may be partially plated nickel, which both may be used in the surface welding technology. In some embodiments, the voltage collecting pad 142 also may be welded onto the conducting plate 160 by other welding technologies, and so the present disclosure is not limited thereto.

Specifically, in an embodiment of the present disclosure, the conducting plate 160 and the busbar 110 are welded by a laser welding technology, FIG. 4 and FIG. 5 schematically illustrate a position of a laser welding point 161. In some embodiments, the conducting plate 160 and the busbar 110 also may be welded by other welding technologies, and so the present disclosure is not limited thereto.

In an embodiment of the present disclosure, each electrical conduction pad, for example, the second electrical conduction pad 172 and the fourth electrical conduction pad 174, which is provided to the lower surface S2 of the second end portion 132 of the flexible circuit board 130, may be welded on the rigid circuit board 120 by the surface welding technology, for example, are respectively welded to the third electrical conduction pad 173 and the fifth electrical conduction pad 175 of the rigid circuit board 120 by the surface welding technology.

As shown in FIG. 6 to FIG. 9, in an embodiment of the present disclosure, the middle portion 133 of the flexible circuit board 130 is a flexible construction, for example but is not limited to a bent structure, a curved structure and the like, which specifically may be a S-shaped structure so that flexibility of the flexible circuit board 130 can be increased.

As shown in FIG. 6 and FIG. 7, in an embodiment of the present disclosure, the connecting assembly C further includes a packaging cover 191. Specifically, the packaging cover 191 is provided to the first end portion 131 of the flexible circuit board 130, the packaging cover 191 is used to package the temperature sensor 141.

As shown in FIG. 6 and FIG. 7, in an embodiment of the present disclosure, the connecting assembly C further includes a strengthening plate 192. Specifically, the strengthening plate 192 is provided to an upper surface S1 of the second end portion 132 of the flexible circuit board 130. The strengthening plate 192 may be a hard plate, and is adhered to the upper surface S1 of the second end portion 132 of the flexible circuit board 130, and is used to strengthen the second end portion 132 of the flexible circuit board 130, and the strengthening plate 192 has a flat upper surface which may be used to be picked and placed in the surface welding procedure.

It should be noted here that the battery connection module shown in the drawings and described in this specification are just a few examples of many kinds of battery connection modules which can employ the principle of the present disclosure. It should be clearly understood that the principle of the present disclosure is limited to any details or any components of the battery connection module shown in the drawings or described in this specification.

Examples are as follows.
As shown in FIG. 4, in an embodiment of the present disclosure, another temperature sensor 141' may be provided, the temperature sensor 141' is close to a bridging piece D and is arranged on the rigid circuit board 120.

As shown in FIG. 5, in an embodiment of the present disclosure, another temperature sensor 141" may be provided, the temperature sensor 141" is relatively independently provided on the rigid circuit board 120, that is, is not close to a bridging piece D or a connecting assembly C.

In an embodiment of the present disclosure, the rigid circuit board 120 may a hard printed circuit board (PCB).

In an embodiment of the present disclosure, the flexible circuit board 130 may be a flexible printed circuit board (FPC), for example, is a flexible circuit board 130 of a double wiring layer construction.

In an embodiment of the present disclosure, the temperature sensor 141 may be a NTC thermistor (Negative Temperature Coefficient thermistor).

In an embodiment of the present disclosure, a material of the busbar 110 may be a metal material, such as aluminum, cooper and the like, also may be a structure of a single type of metal material, a laminated structure of a plurality of types of metal materials or a combination thereof.

In an embodiment of the present disclosure, conductive traces on the voltage collecting pad 142, the temperature collecting wiring 151, the voltage collecting wiring 152, the electrical conduction pads, the rigid circuit board 120 and the like may employ conductive metal materials, for example but is not limited to cooper.

Based on the above detailed description of several exemplary embodiments of the battery connection module 100 proposed by the present disclosure, hereinafter an exemplary embodiment of the battery pack proposed by the present disclosure will be described.

As shown in FIG. 1, in an embodiment of the present disclosure, the battery pack proposed by the present disclosure includes the battery connection module 100 which is proposed by the present disclosure and is described in detail in the above embodiments. Here, the battery connection module 100 is provided on the plurality of batteries 200 of the battery pack, two ends of the plurality of batteries 200 are provided with frame structures, such as end plates 300 and the like, and other structure.

It should be noted here that the battery pack shown in the drawings and described in this specification are just a few examples of many kinds of battery packs which can employ the principle of the present disclosure. It should be clearly understood that the principle of the present disclosure is limited to any details or any components of the battery pack shown in the drawings or described in this specification.

In conclusion, the battery connection module proposed by the present disclosure includes a plurality of busbars, a rigid circuit board and at least one connecting assembly. The connecting assembly is used to connect the corresponding busbar and the rigid circuit board, the connecting assembly includes a flexible circuit board, a temperature sensor and a voltage collecting pad. The flexible circuit board has a first end portion, a second end portion and a middle portion, the first end portion connects the corresponding busbar, the second end portion connects the rigid circuit board, the middle portion connects the first end portion and the second end portion, the flexible circuit board is provided with a temperature collecting wiring and a voltage collecting wiring. The temperature sensor and the voltage collecting pad are respectively provided to the first end portion, the voltage collecting pad is connected to the corresponding busbar, the temperature sensor and the voltage collecting pad are connected to the second end portion of the rigid circuit board respectively via the temperature collecting wiring and the voltage collecting wiring. Accordingly, the present disclosure can utilize the flexible circuit board which is provided with the voltage collecting wiring and the temperature collecting wiring at the same time, and can meet the need that temperature information and voltage information are collected at the same time.

The exemplary embodiments of the battery connection module proposed by the present disclosure are described and/or illustrated in detail above. However, the embodiments of the present disclosure are not limited to the specific embodiments described herein. On the contrary, the components and/or steps of each embodiment can be used independently and separately from other components and/or steps described herein. Each component and/or step of one embodiment may also be used in combination with other components and/or steps of other embodiments. When introducing the elements/components/etc. described and/or illustrated here, the terms "one", "a/an" and "the above" are used to indicate the existence of one or more elements/components/etc. The terms "include/includes/including", "comprise/comprises/comprising" and "has/have/having" are used to mean open inclusion and mean that there may be other elements/components/etc. besides the listed elements/components/etc. In addition, the terms "first" and "second" in the claims and the specification are used only as marks and are not as a numerical limitation on their objects.

Although the battery connection module proposed by the present disclosure has been described according to different specific embodiments, a person skilled in the art will recognize that the implementation of the present disclosure can be modified within the scope of the claims.

## Claims

1. A battery connection module (100) used to connect a plurality of batteries (200), the battery connection module (100) comprising:
a plurality of busbars (110) used to connect the plurality of batteries (200);
a rigid circuit board (120) connected to the plurality of busbars (110); and
at least one connecting assembly (C) used to connect the corresponding busbar (110) and the rigid circuit board (120), the connecting assembly (C) comprising:
a flexible circuit board (130) having a first end portion (131), a second end portion (132) and a middle portion (133), the first end portion (131) connecting the corresponding busbar (110), the second end portion (132) connecting the rigid circuit board (120), the middle portion (133) connecting the first end portion (131) and the second end portion (132), the flexible circuit board (130) being provided with a temperature collecting wiring (151) and a voltage collecting wiring (152);
a temperature sensor (141) and a voltage collecting pad (142) respectively provided to the first end portion (131), the voltage collecting pad (142) being connected to the corresponding busbar (110), the temperature sensor (141) and the voltage collecting pad (142) being connected to the rigid circuit board (120) at the second end portion (132) respectively via the temperature collecting wiring (151) and the voltage collecting wiring (152),
wherein the connecting assembly (C) further comprises a conducting plate (160) provided between the first end portion (131) of the flexible circuit board (130) and the busbar (110) and/or the conducting plate (160) has an electrical conduction function and a thermal conduction **characterised in that** the voltage collecting pad (142) is provided to a lower surface of the first end portion (131) and is connected to an upper surface of the conducting plate (160), the temperature sensor (141) is provided to an upper surface of the first end portion (131).

2. The battery connection module according to claim 1, wherein the temperature sensor (141) corresponds to a middle position of the voltage collecting pad (142) in position and/or
the temperature collecting wiring (151) provided to an upper surface of the flexible circuit board (130), the temperature collecting wiring (151) has a first end (1511), the first end (1511) extends to the first end portion (131) of the flexible circuit board (130) and has a first electrical conduction pad (171), the first electrical conduction pad (171) is used to connect the temperature sensor (141).

3. The battery connection module according to claim 2, wherein the temperature collecting wiring (151) has a second end (1512), the second end portion (132) of the flexible circuit board (130) is provided with a first electrical conduction hole (181), the second end (1512) extends to the second end portion (132) of the flexible circuit board (130), the second end (1512) connects the first electrical conduction hole (181) and is connected to a lower surface of the flexible circuit board (130) via the first electrical conduction hole (181).

4. The battery connection module according to claim 3, wherein
a lower surface of the second end portion (132) of the flexible circuit board (130) is provided with a second electrical conduction pad (172), the second electrical conduction pad (172) is connected to the rigid circuit board (120);
the second end (1512) of the temperature collecting wiring (151) is connected to the second electrical conduction pad (172) via the first electrical conduction hole (181).

5. The battery connection module according to claim 4, wherein the rigid circuit board (120) is provided with a third electrical conduction pad (173), the third electrical conduction pad (173) is used to be connected to the second electrical conduction pad (172).

6. The battery connection module according to any one of the preceding claims, wherein the voltage collecting wiring (152) is provided to a lower surface of the flexible circuit board (130), the voltage collecting wiring (152) has a third end (1521), the third end (1521) connects the voltage collecting pad (142).

7. The battery connection module according to any one of the preceding claims, wherein the voltage collecting wiring (152) has a fourth end (1522), a lower surface of the second end portion (132) of the flexible circuit board (130) is provided with a fourth electrical conduction pad (174), the fourth end (1522) of the voltage collecting wiring (152) is connected to the fourth electrical conduction pad (174).

8. The battery connection module according to claim 7, wherein the rigid circuit board (120) is provided with a fifth electrical conduction pad (175), the fifth electrical conduction pad (175) is used to be connected to the fourth electrical conduction pad (174).

9. The battery connection module according to any one of the preceding claims, wherein a connection between the conducting plate (160) and the busbar (110) and a connection between the conducting plate (160) and the flexible circuit board (130) employ different welding processes.

10. The battery connection module according to any one of the preceding claims, wherein the voltage collecting pad (142) is welded onto the conducting plate (160) by a surface welding technology and/or the conducting plate (160) and the busbar (110) are welded by a laser welding technology.

11. The battery connection module according to any one of the preceding claims, wherein the middle portion (133) of the flexible circuit board (130) is a flexible construction.

12. The battery connection module according to any one of the preceding claims, wherein the connecting assembly (C) further comprises a packaging cover (191) which is provided to the first end portion (131) of the flexible circuit board (130) and is used to package the temperature sensor (141).

13. The battery connection module according to any one of the preceding claims, wherein the connecting assembly (C) further comprises a strengthening plate (192) provided to an upper surface of the second end portion (132) of the flexible circuit board (130).

## Patentansprüche

1. Batterieverbindungsmodul (100), das verwendet wird, um eine Vielzahl von Batterien (200) zu verbinden, wobei das Batterieverbindungsmodul (100) umfasst:
eine Vielzahl von Sammelschienen (110), die verwendet wird, um die Vielzahl von Batterien (200) zu verbinden;
eine starre Leiterplatte (120), die mit der Vielzahl von Sammelschienen (110) verbunden ist; und
mindestens eine Verbindungsanordnung (C), die verwendet wird, um die entsprechende Sammelschiene (110) und die starre Leiterplatte (120) zu verbinden, wobei die Verbindungsanordnung (C) umfasst:
eine flexible Leiterplatte (130), die einen ersten Endabschnitt (131), einen zweiten Endabschnitt (132) und einen Mittelabschnitt (133) aufweist, wobei der erste Endabschnitt (131) die entsprechende Sammelschiene (110) verbindet, der zweite Endabschnitt (132) die starre Leiterplatte (120) verbindet, und der Mittelabschnitt (133) den ersten Endabschnitt (131) und den zweiten Endabschnitt (132) verbindet, wobei die flexible Leiterplatte (130) mit einer Temperatursammelverdrahtung (151) und einer Spannungssammelverdrahtung (152) bereitgestellt ist;
einen Temperatursensor (141) und ein Spannungssammelpad (142), die jeweils an dem ersten Endabschnitt (131) bereitgestellt sind, wobei das Spannungssammelpad (142) mit der entsprechenden Sammelschiene (110) verbunden ist, wobei der Temperatursensor (141) und das Spannungssammelpad (142) jeweils über die Temperatursammelverdrahtung (151) und die Spannungssammelverdrahtung (152) an dem zweiten Endabschnitt (132) mit der starren Leiterplatte (120) verbunden sind, wobei die Verbindungsanordnung (C) weiter eine leitfähige Platte (160) umfasst, die zwischen dem ersten Endabschnitt (131) der flexiblen Leiterplatte (130) und der Sammelschiene (110) bereitgestellt ist, und/oder die leitfähige Platte (160) eine elektrische Leitungsfunktion und eine Wärmeleitungsfunktion aufweist, **dadurch gekennzeichnet, dass** das Spannungssammelpad (142) an einer unteren Oberfläche des ersten Endabschnitts (131) bereitgestellt ist und mit einer oberen Oberfläche der leitfähigen Platte (160) verbunden ist, der Temperatursensor (141) an einer oberen Oberfläche des ersten Endabschnitts (131) bereitgestellt ist.

2. Batterieverbindungsmodul nach Anspruch 1, wobei der Temperatursensor (141) einer mittleren Position des Spannungssammelpads (142) in Position entspricht und/oder
die Temperatursammelverdrahtung (151) an einer oberen Oberfläche der flexiblen Leiterplatte (130) bereitgestellt ist, die Temperatursammelverdrahtung (151) ein erstes Ende (1511) aufweist, sich das erste Ende (1511) zum ersten Endabschnitt (131) der flexiblen Leiterplatte (130) erstreckt und ein erstes elektrisches Leitungspad (171) aufweist, wobei das erste elektrische Leitungspad (171) verwendet wird, um den Temperatursensor (141) zu verbinden.

3. Batterieverbindungsmodul nach Anspruch 2, wobei die Temperatursammelverdrahtung (151) ein zweites Ende (1512) aufweist, der zweite Endabschnitt (132) der flexiblen Leiterplatte (130) mit einem ersten elektrischen Leitungsloch (181) bereitgestellt ist, sich das zweite Ende (1512) zum zweiten Endabschnitt (132) der flexiblen Leiterplatte (130) erstreckt, das zweite Ende (1512) das erste elektrische Leitungsloch (181) verbindet und über das erste elektrische Leitungsloch (181) mit einer unteren Oberfläche der flexiblen Leiterplatte (130) verbunden ist.

4. Batterieverbindungsmodul nach Anspruch 3, wobei
eine untere Oberfläche des zweiten Endabschnitts (132) der flexiblen Leiterplatte (130) mit einem zweiten elektrischen Leitungspad (172) bereitgestellt ist, wobei das zweite elektrische Leitungspad (172) mit der starren Leiterplatte (120) verbunden ist;
das zweite Ende (1512) der Temperatursammelverdrahtung (151) über das erste elektrische Leitungsloch (181) mit dem zweiten elektrischen Leitungspad (172) verbunden ist.

5. Batterieverbindungsmodul nach Anspruch 4, wobei die starre Leiterplatte (120) mit einem dritten elektrischen Leitungspad (173) bereitgestellt ist, wobei das dritte elektrische Leitungspad (173) verwendet wird, um mit dem zweiten elektrischen Leitungspad (172) verbunden zu werden.

6. Batterieverbindungsmodul nach einem der vorstehenden Ansprüche, wobei die Spannungssammelverdrahtung (152) an einer unteren Oberfläche der flexiblen Leiterplatte (130) bereitgestellt ist, die Spannungssammelverdrahtung (152) ein drittes Ende (1521) aufweist, und das dritte Ende (1521) das Spannungssammelpad (142) verbindet.

7. Batterieverbindungsmodul nach einem der vorstehenden Ansprüche, wobei die Spannungssammelverdrahtung (152) ein viertes Ende (1522) aufweist, eine untere Oberfläche des zweiten Endabschnitts (132) der flexiblen Leiterplatte (130) mit einem vierten elektrischen Leitungspad (174) bereitgestellt ist, und das vierte Ende (1522) der Spannungssammelverdrahtung (152) mit dem vierten elektrischen Leitungspad (174) verbunden ist.

8. Batterieverbindungsmodul nach Anspruch 7, wobei die starre Leiterplatte (120) mit einem fünften elektrischen Leitungspad (175) bereitgestellt ist, wobei das fünfte elektrische Leitungspad (175) verwendet wird, um mit dem vierten elektrischen Leitungspad (174) verbunden zu werden.

9. Batterieverbindungsmodul nach einem der vorstehenden Ansprüche, wobei eine Verbindung zwischen der leitfähigen Platte (160) und der Sammelschiene (110) und eine Verbindung zwischen der leitfähigen Platte (160) und der flexiblen Leiterplatte (130) unterschiedliche Schweißprozesse einsetzen.

10. Batterieverbindungsmodul nach einem der vorstehenden Ansprüche, wobei das Spannungssammelpad (142) durch eine Oberflächenschweißtechnologie auf die leitfähige Platte (160) geschweißt ist, und/oder die leitfähige Platte (160) und die Sammelschiene (110) durch eine Laserschweißtechnologie verschweißt sind.

11. Batterieverbindungsmodul nach einem der vorstehenden Ansprüche, wobei der Mittelabschnitt (133) der flexiblen Leiterplatte (130) eine flexible Konstruktion ist.

12. Batterieverbindungsmodul nach einem der vorstehenden Ansprüche, wobei die Verbindungsanordnung (C) weiter eine Packungsabdeckung (191) umfasst, die am ersten Endabschnitt (131) der flexiblen Leiterplatte (130) bereitgestellt ist und verwendet wird, um den Temperatursensor (141) zu packen.

13. Batterieverbindungsmodul nach einem der vorstehenden Ansprüche, wobei die Verbindungsanordnung (C) weiter eine Verstärkungsplatte (192) umfasst, die auf einer oberen Oberfläche des zweiten Endabschnitts (132) der flexiblen Leiterplatte (130) bereitgestellt ist.

## Revendications

1. Module de connexion de batterie (100) utilisé pour connecter une pluralité de batteries (200), le module de connexion de batterie (100) comprenant :
une pluralité de barres omnibus (110) utilisées pour connecter la pluralité de batteries (200) ;
une carte de circuit imprimé rigide (120) connectée à la pluralité de barres omnibus (110) ; et
au moins un ensemble de connexion (C) utilisé pour connecter la barre omnibus (110) correspondante et le circuit imprimé rigide (120), l'ensemble de connexion (C) comprenant :
une carte de circuit imprimé flexible (130) présentant une première partie d'extrémité (131), une deuxième partie d'extrémité (132) et une partie centrale (133), la première partie d'extrémité (131) connectant la barre omnibus (110) correspondante, la deuxième partie d'extrémité (132) connectant la carte de circuit imprimé rigide (120), la partie centrale (133) connectant la première partie d'extrémité (131) et la deuxième partie d'extrémité (132), la carte de circuit imprimé flexible (130) étant pourvue d'un câblage de collecte de température (151) et d'un câblage de collecte de tension (152) ;
un capteur de température (141) et un plot de collecte de tension (142) respectivement prévus sur la première partie d'extrémité (131), le plot de collecte de tension (142) étant connecté à la barre omnibus (110) correspondante, le capteur de température (141) et le plot de collecte de tension (142) étant connectés à la carte de circuit imprimé rigide (120) au niveau de la deuxième partie d'extrémité (132) respectivement par l'intermédiaire du câblage de collecte de température (151) et du câblage de collecte de tension (152), dans lequel l'ensemble de connexion (C) comprend en outre une plaque conductrice (160) prévue entre la première partie d'extrémité (131) de la carte de circuit imprimé flexible (130) et la barre omnibus (110) et/ou la plaque conductrice (160) présente une fonction de conduction électrique et une conduction thermique, **caractérisé en ce que** le plot de collecte de tension (142) est prévu sur une surface inférieure de la première partie d'extrémité (131) et est connecté à une surface supérieure de la plaque conductrice (160), le capteur de température (141) est prévu sur une surface supérieure de la première partie d'extrémité (131).

2. Module de connexion de batterie selon la revendication 1, dans lequel le capteur de température (141) correspond à une position centrale du plot collecteur de tension (142) en position et/ou
le câblage de collecte de température (151) est prévu sur une surface supérieure de la carte de circuit imprimé flexible (130), le câblage de collecte de température (151) présente une première extrémité (1511), la première extrémité (1511) s'étend jusqu'à la première partie d'extrémité (131) de la carte de circuit imprimé flexible (130) et présente un premier plot de conduction électrique (171), le premier plot de conduction électrique (171) est utilisé pour connecter le capteur de température (141).

3. Module de connexion de batterie selon la revendication 2, dans lequel le câblage de collecte de température (151) présente une deuxième extrémité (1512), la deuxième partie d'extrémité (132) de la carte de circuit imprimé flexible (130) est pourvue d'un premier trou de conduction électrique (181), la deuxième extrémité (1512) s'étend jusqu'à la deuxième partie d'extrémité (132) de la carte de circuit imprimé flexible (130), la deuxième extrémité (1512) connecte le premier trou de conduction électrique (181) et est connectée à une surface inférieure de la carte de circuit imprimé flexible (130) par l'intermédiaire du premier trou de conduction électrique (181).

4. Module de connexion de batterie selon la revendication 3, dans lequel
une surface inférieure de la deuxième partie d'extrémité (132) de la carte de circuit imprimé flexible (130) est pourvue d'un deuxième plot de conduction électrique (172), le deuxième plot de conduction électrique (172) est connecté à la carte de circuit imprimé rigide (120) ;
la deuxième extrémité (1512) du câblage de collecte de température (151) est connectée au deuxième plot de conduction électrique (172) par l'intermédiaire du premier trou de conduction électrique (181).

5. Module de connexion de batterie selon la revendication 4, dans lequel la carte de circuit imprimé rigide (120) est pourvue d'un troisième plot de conduction électrique (173), le troisième plot de conduction électrique (173) étant utilisé pour être connecté au deuxième plot de conduction électrique (172).

6. Module de connexion de batterie selon l'une quelconque des revendications précédentes, dans lequel le câblage de collecte de tension (152) est prévu sur une surface inférieure de la carte de circuit imprimé flexible (130), le câblage de collecte de tension (152) présente une troisième extrémité (1521), la troisième extrémité (1521) connecte le plot de collecte de tension (142).

7. Module de connexion de batterie selon l'une quelconque des revendications précédentes, dans lequel le câblage de collecte de tension (152) présente une quatrième extrémité (1522), une surface inférieure de la deuxième partie d'extrémité (132) de la carte de circuit imprimé flexible (130) est pourvue d'un quatrième plot de conduction électrique (174), la quatrième extrémité (1522) du câblage de collecte de tension (152) est connectée au quatrième plot de conduction électrique (174).

8. Module de connexion de batterie selon la revendication 7, dans lequel la carte de circuit imprimé rigide (120) est pourvue d'un cinquième plot de conduction électrique (175), le cinquième plot de conduction électrique (175) étant utilisé pour être connecté au quatrième plot de conduction électrique (174).

9. Module de connexion de batterie selon l'une quelconque des revendications précédentes, dans lequel une connexion entre la plaque conductrice (160) et la barre omnibus (110) et une connexion entre la plaque conductrice (160) et la carte de circuit imprimé flexible (130) emploient des processus de soudage différents.

10. Module de connexion de batterie selon l'une quelconque des revendications précédentes, dans lequel le plot collecteur de tension (142) est soudé sur la plaque conductrice (160) par une technologie de soudage en surface et/ou la plaque conductrice (160) et la barre omnibus (110) sont soudées par une technologie de soudage laser.

11. Module de connexion de batterie selon l'une quelconque des revendications précédentes, dans lequel la partie centrale (133) de la carte de circuit imprimé flexible (130) est une construction flexible.

12. Module de connexion de batterie selon l'une quelconque des revendications précédentes, dans lequel l'ensemble de connexion (C) comprend en outre un couvercle d'encapsulation (191) qui est prévu sur la première partie d'extrémité (131) de la carte de circuit imprimé flexible (130) et est utilisé pour encapsuler le capteur de température (141).

13. Module de connexion de batterie selon l'une quelconque des revendications précédentes, dans lequel l'ensemble de connexion (C) comprend en outre une plaque de renfort (192) prévue sur une surface supérieure de la deuxième partie d'extrémité (132) de la carte de circuit imprimé flexible (130).
